# EUROPÄISCHE PATENTSCHRIFT

(11) **EP 0 803 177 B1**
(45) Veröffentlichungstag und Bekanntmachung des Hinweises auf die Patenterteilung: **22.01.2003**
(21) Anmeldenummer: 97111410.3
(22) Anmeldetag: 11.04.1996
(51) Int. Cl.: A01C 7/08

(54) **Verteilerkopf für eine pneumatische Sämaschine**
Pneumatic sowing machine distributor head
Tête distributrice pour semoir pneumatique

(30) Priorität: 17.06.1995 DE 19522060; 17.10.1995 DE 19538586
(43) Veröffentlichungstag der Anmeldung: 29.10.1997
(62) Teilanmeldung aus: 96105695.9
(73) Patentinhaber: Amazonen-Werke H. Dreyer GmbH & Co. KG, 49205 Hasbergen (DE)
(72) Erfinder: Gattermann, Bernd, Dipl.-Ing., 27798 Hude (DE); Siefken, Claus, 27777 Ganderkesee (DE)

(56) Entgegenhaltungen:
- EP-A- 0 102 333
- DE-A- 1 557 913
- DE-C- 3 805 148
- FR-A- 1 569 181
- US-A- 4 473 016
- US-A- 4 989 784

## Beschreibung

Die Erfindung betrifft einen Verteilerkopf für eine pneumatische Sämaschine gemäß des Oberbegriffes des Patentanspruches 1.

Ein derartiger Verteilerkopf ist in der DE-44 11 240 gezeigt. Bei diesem Verteilerkopf sind Absperrschieber durch Öffnungen in dem Deckelelement vor die Abzweige zu schieben, so daß einzelne Leitungen abzusperren sind.

Ein weiterer Verteilerkopf ist beispielsweise durch die EP 87 114 374 bekannt. Dieser Verteilerkopf weist ein Deckelelement und eine Bodenplatte auf, zwischen welche die Abzweige eingeklemmt sind und die Seitenflächen benachbarter Abzweige abdichtend aneinander anliegen. Da die Seitenflächen der Abzweige flexibel ausgebildet sind, ist es möglich, eine unterschiedliche Anzahl von Abzweigen zwischen dem Deckelelement und dem Bodenelement anzuordnen, so daß je entsprechend der an der Sämaschine angebrachten Säscharen Abzweige an dem Verteilerkopf angebracht werden können. Einzelnen Abzweigen sind Verschließeinrichtungen zugeordnet, um einzelne Abzweige absperren zu können.

Durch den Prospekt Accord mit Druckvermerk D75 40 10-02 91 ist ein Verteilerkopf bekannt, in welchem Deckelelemente mit Absperrvorrichtungen einsetzbar sind, so daß mehr oder weniger an dem Verteilerkopf angeordnete Abzweigleitungen freigegeben oder abgedeckt werden können. Desweiteren ist durch diesen Prospekt es bekannt, verschiedenen Verteilerköpfe mit unterschiedlichen Anzahl von Abzweigungen einzusetzen.

Der Erfindung liegt die Aufgabe zugrunde, auf einfache Weise für einen Verteilerkopf eine einfach ausgebildete und robuste Verschließeinrichtung zu schaffen.

Diese Aufgabe wird erfindungsgemäß durch die kennzeichnenden Merkmale des Anspruches 1 gelöst.

Infolge dieser Maßnahmen wird auch unter schwierigsten Einsatzbedingungen, insbesondere wenn Verunreinigungen zwischen Schieber und der Grundplatte gelangen sollten, immer eine sichere Führung der Schieber erreicht. Die Schieber können so in jedem Falle sicher die abzudeckenden Auslässe des Verteilerkopfes abdecken. Damit die Schieber die tunnelartigen Führungselemente nicht anheben können, ist vorgesehen, daß die Führungselemente mittels Befestigungselementen, vorzugsweise an dem Unterteil, befestigt sind.

Es hat sich als vorteilhaft herausgestellt, daß die Schieber auf ihrer oberen Seite dachförmig mit seitlich schräg nach unten abfallenden Flächen ausgebildet sind. Hierdurch wird erreicht, daß die auf die Schieber aufprallenden Materialpartikel seitlich abgelenkt werden und über eine Anzahl von Abzweigen verteilt werden, so daß verhindert wird, daß das gesamte Material, welches dem verschlossenen Abzweig an sich zugeleitet werden soll, den seitlich unmittelbar neben dem Abzweig liegenden Abzweigen verteilt wird, sondern durch die seitlichen Bewegungskomponenten auf eine größere Anzahl von Abzweigen verteilt wird.

Weiterhin ist in einer Ausführungsform vorgesehen, daß die Schieber zusätzlich teilweise die unmittelbar neben dem abgedeckten Abzweig liegende Nachbarabzweige abdecken. Hierdurch wird gewährleistet, daß die ansich dem abgedeckten Abzweig zugeführte Materialmenge nicht in zu großen Mengen den unmittelbar neben dem abgedeckten Abzweig liedende Nachbarabzweig zugeführt, sondern auf weitere Abzweige zugeleitet wird. Hierbei kann die Abdeckung der Nachbarabzweige etwa 10-50% deren Fläche betragen.

Desweiteren ist vorgesehen, daß die Schieber im Bereich des Verteilerkopfes außerhalb des Verteilerraumes mit einem Schaumstoff, beispielsweise einem Polyurethan-Schaum gegenüber dem Verteilerraum abgedichtet sind. Infolge dieser Maßnahme wird in äußerst einfacher Weise eine Abdichtung der inneren Verteilerwand gegenüber den Schiebern erreicht. Aufgrund der Eigenschaften des Polyurethan-Schaumes bilden sich die Schiebeschlitze für die Schieber selbst aus.

Um eine ausreichende Abdichtung zu erreichen, ist vorgesehen, daß die Führungselemente bis an die Wand des inneren Deckelelementes heranragen.

Es läßt sich in einfacher Weise eine Fahrgassenschaltung und/oder eine Teilbreitenschaltung realisieren, in dem ein Teil der Zuleitungen abgeschaltet wird.

Hierbei kann in einer bevorzugten Ausführungsform vorgesehen sein, daß die Verschließeinrichtung als Teilbreitenschaltung ausgebildet ist, mit welcher jeder zweite Abzweig verschließbar ist, wobei gleichzeitig über die Dosiereinrichtung die zudosierte Menge reduzierbar ist.

In einer weiteren Ausführungsform ist vorgesehen, daß gleichzeitig an einem Verteilerkopf eine Fahrgassenschaltung und eine Teilbreitenschaltung vorgesehen ist, wobei jeweils für die Fahrgassenschaltung und die Teilbreitenschaltung eine Steuerscheibe vorhanden ist, die unabhängig voneinander mittels einer Fernbedienungseinrichtung betätigbar sind.

Mittels der Steuerscheiben lassen sich Verschlußelemente betätigen, welche die Abzweige verschließen.

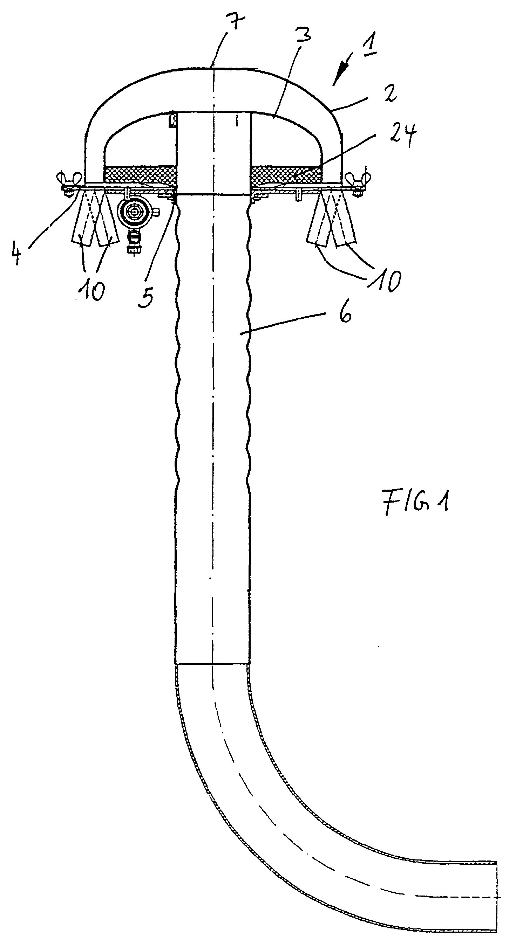

Weitere Einzelheiten der Erfindung sind den übrigen Unteransprüchen, der Beispielsbeschreibung und den Zeichnungen zu entnehmen. Hierbei zeigen
- Fig.1: einen Verteilerkopf mit Steigrohr für eine pneumatische Sämaschine in Prinzipdarstellung,

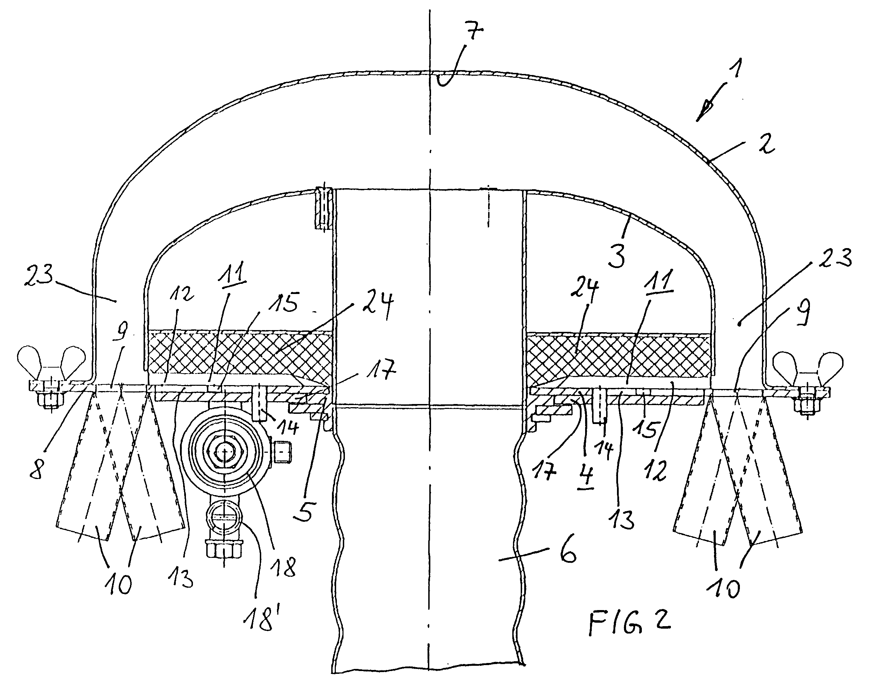

- Fig.2: den Verteilerkopf gemäß Fig.1 in vergrößertem Maßstab,

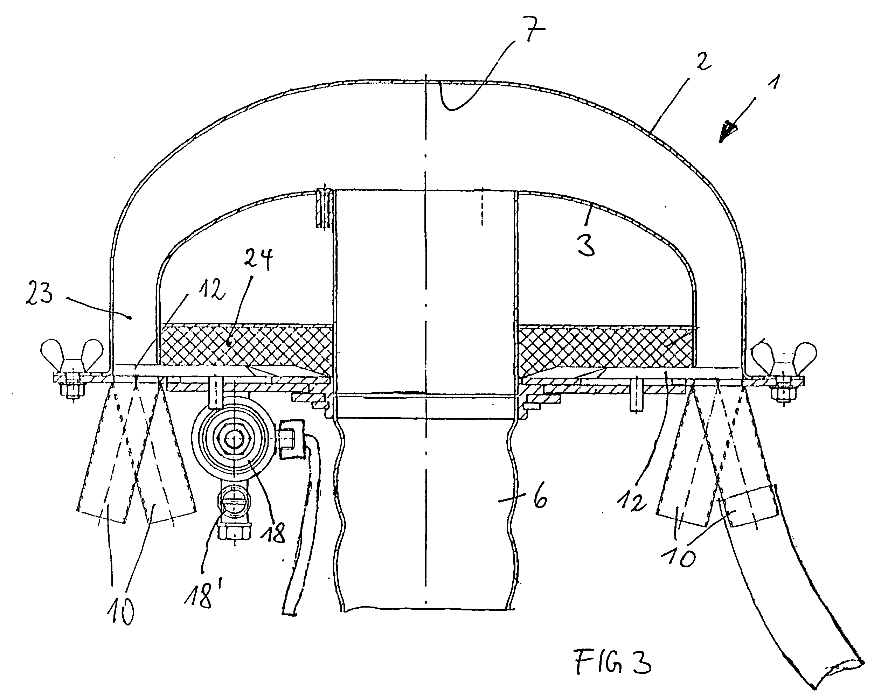

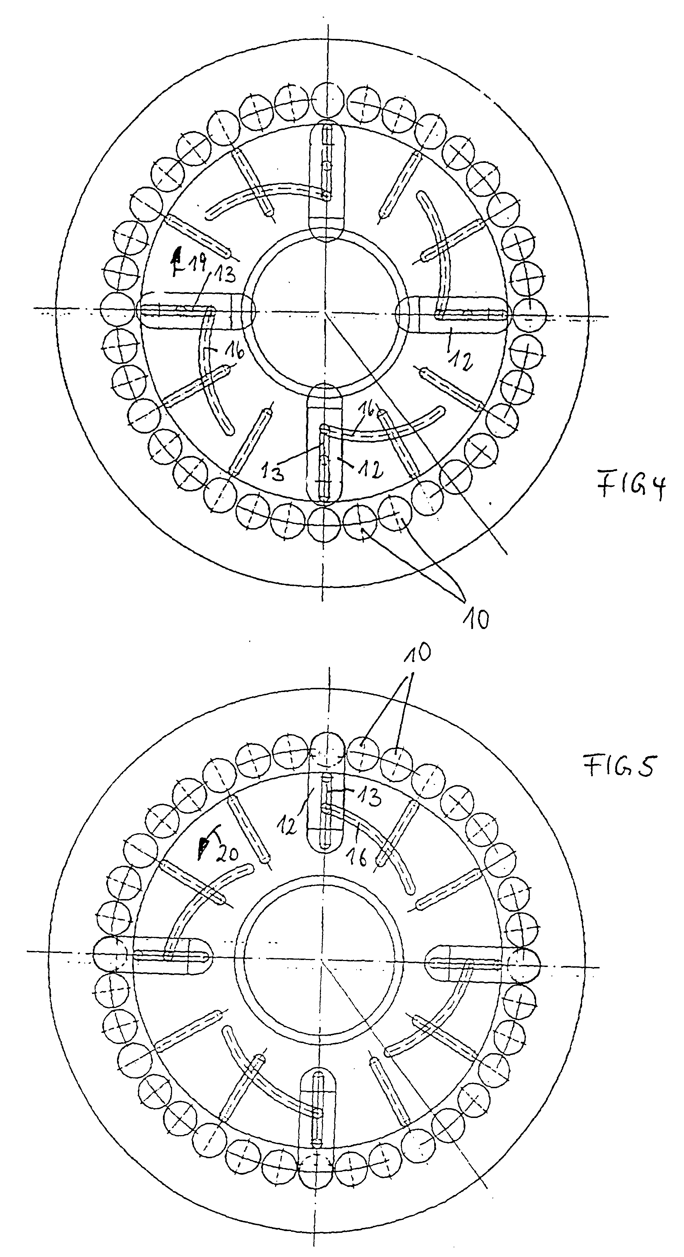

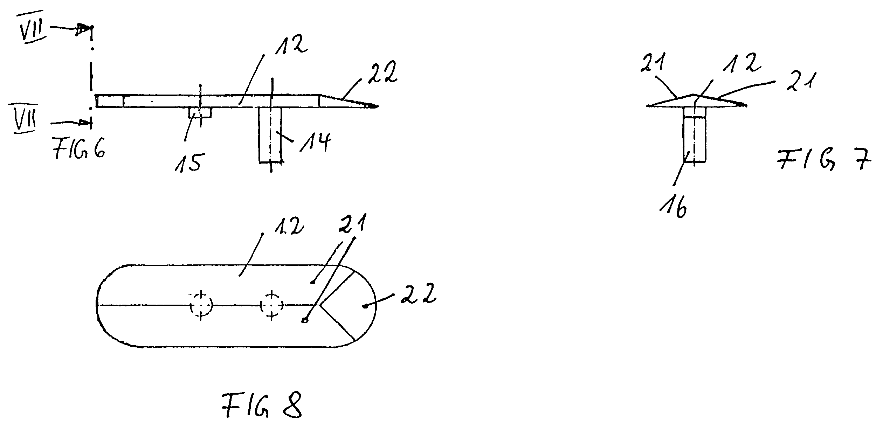

- Fig.3: den Verteilerkopf nach Fig.2, wobei jedoch die Verschlußelemente der Verschließeinrichtung in Verschließstellung sich befinden,
- Fig.4: den Verteilerkopf nach Fig.2 in der Ansicht IV-IV,
- Fig.5: den Verteilerkopf gemäß Fig.3 in der gleichen Ansicht wie Fig.4,
- Fig.6: einen Schieber in Seitenansicht,
- Fig.7: den Schieber in der Ansicht VII-VII,
- Fig.8: den Schieber in der Draufsicht,
- Fig.9: eine weitere Anordung einer Verschließeinrichtung in der Darstellungsweise gemäß Fig.4,
- Fig.10: den Verteilerkopf gemäß Fig.6 entsprechend der Darstellung nach Fig.5,
- Fig.11: den Verteilerkopf nach Fig.5, jedoch mit anders ausgebildeten Schiebern,
- Fig.12: den Verteilerkopf mit Steigrohr für eine pneumatische Sämaschine im Schnitt und in Prinzipdarstellung,

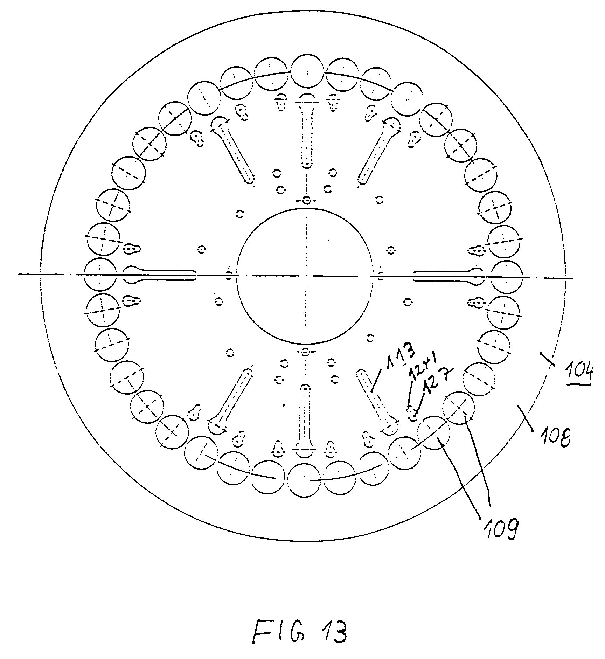

- Fig.13: das Unterteil in der Draufsicht in der Ansicht II-II,

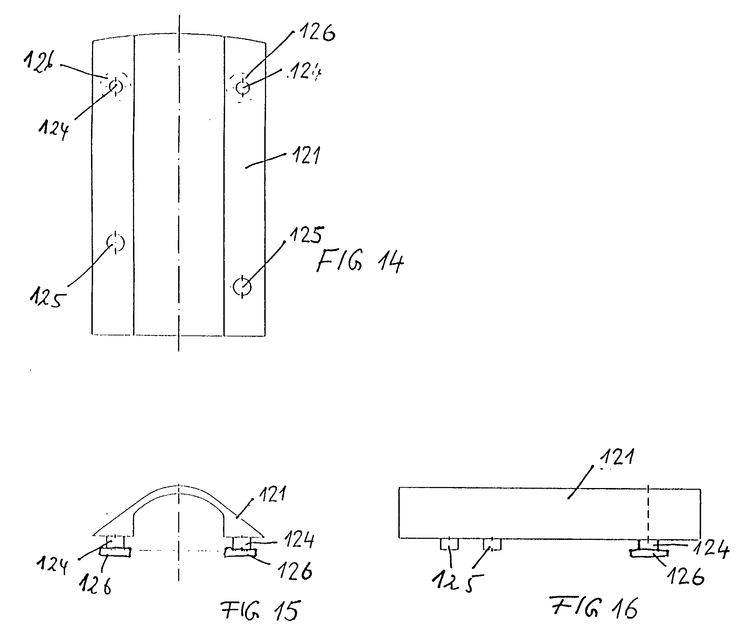

- Fig.14: das tunnelartige Führungselement in der Draufsicht und in einem anderen Maßstab,
- Fig.15: das tunnelartige Führungselement in der Vorderansicht und
- Fig.16: das tunnelartige Führungselement in Seitenansicht.

Der Verteilerkopf 1 ist für eine pneumatische Sämaschine vorgesehen. Der Verteilerkopf 1 ist mit einem äußeren Deckelelement 2, inneren Deckelelement 3 und einem Unterteil 4 ausgestattet. Das Unterteil 4 weist ein Verbindungselement 5 zur Anbringung auf dem teilweise als Wellrohr ausgebildetem Steigrohr 6 auf. Vor dem Steigrohr 6 kann ein bogenförmiges Rohr angeordnet sein, welches an eine nicht dargestellte Dosiereinrichtung und an einem nicht dargestellten Gebläse angeschlossen ist. Über der Dosiereinrichtung wird dem Steigrohr 6 und dem Verteilerkopf 1 in Verbindung mit dem Luftstrom in bekannter und daher nicht näher dargestellter Weise Saatgut oder Dünger aus einem Vorratsbehälter zugeführt.

Das Deckelelement 2 ist im oberen Bereich als Prallfläche 7 ausgebildet. Das Unterteil 4 des Verteilerkopfes 1 besteht aus einer als Blechplatte ausgebildeten Platte 8 mit Durchbrüchen 9, an die sich die Abzeige 10 anschließen. Die Abzweige 10 sind an der Belchplatte 8 angeschweißt. Sie können jedoch auch in die Durchbrüche 9 eingeklipst bzw. an diese angeklipst werden. Die Durchbrüche 9 für die Abzweige 10 werden in bevorzugter Weise auf einer CNC-gesteuerten oder anderen Werkzeugmaschine in die Platte 8 eingebracht. Die Durchmesser der Durchbrüche 9 sind an die Anzahl der Abzweige 10 angepaßt. Die Blechplatte 8 ist an dem Flanschelement 5, welches an dem Steigrohr 6 bzw. dessen Verlängerung befestigt ist, befestigt.

Das Deckelelement 2 besitzt eine nach unten offene, halbkugelähnliche Form, die im Prallbereich 7 abgeflacht ist. Das Deckelelement 2 ist rotationssymmetrisch und konkav gewölbt ausgebildet und als plattgedrückte Halbkugel ausgeformt. Im Inneren des Deckelelementes 2 ist ein weiteres inneres Deckelelement 3 angeordnet.

Die Abzweige 10 sind nach unten gerichtet, wobei sie entweder senkrecht nach unten oder in einem Winkelbereich zwischen 0-60 Grad von der Senkrechten nach unten abweichend angeordnet sein können.

Je nach Anzahl der anzuschließenden Säschare und entsprechend der Arbeitsbreite der Drillmaschine und des Scharabstandes, wird an dem Verteilerkopf 1 das entsprechende Unterteil 4 mit der erforderlichen Anzahl von Abzweigungen 10 angebracht.

Hierzu sind für den Verteilerkopf 1 eine Anzahl verschiedener Unterteile 4 jeweils mit einer verschiedenen Anzahl von Abzweigungen vorgesehen, so daß der Verteilerkopf durch das entsprechende Unterteil 4 mit der erforderlichen Anzahl von Abzweigungen 10 in einfacher und kostengünstiger Weise auszurüsten ist.

Die verschiedenen Unterteile (mit der verschiedenen Anzahl von Durchbrüchen und Abzweigen) werden in vorbeschriebener Weise hergestellt und dann zur Herstellung der Verteilerköpfe mit den jeweils gewünschten Abzweigungen dem Verteilerkopf zugeordnet. Somit lassen sich in kostengünstiger und rationeller Weise verschiedene Verteilerköpfe herstellen.

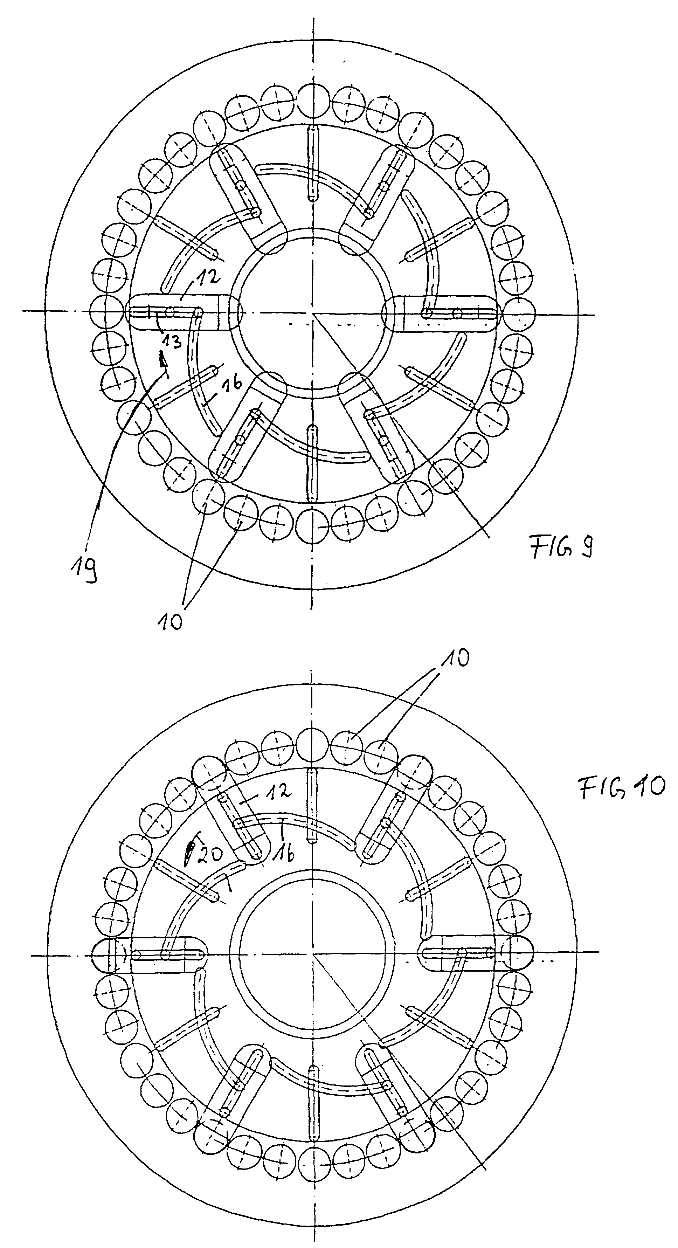

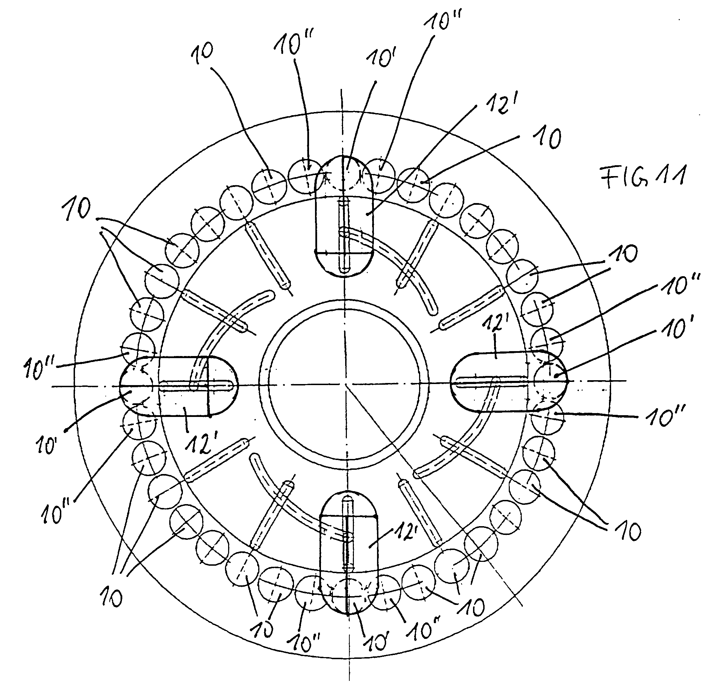

Dem Verteilerkopf 1 ist eine integrierte Verschließeinrichtung 11 für das Verschließen einer bestimmten Anzahl der Abzweige 10 zugeordnet. Diese Verschließeinrichtung 11 ist als Fahrgassenschaltung ausgebildet und weist eine entsprechend der gewünschten Anzahl der abzuschaltenden Säschare entsprechende Anzahl von Verschlußelementen, die als Schieber 12 ausgebildet sind, auf. Diese Schieber 12 werden in den in der Bodenplatte 8 radial sich erstreckenden Führungen 13 mittels der an den Schiebern 12 angeordneten und als Bolzen 14 und 15 ausgebildeten Führungselementen geführt. Der eine Bolzen 14 ist länger ausgebildet und greift zusätzlich in die Kurvenführung 16, die sich in der Steuerscheibe 17 befinden. Die Steuerscheibe 17 ist unterhalb der Bodenplatte 8 drehbar an dem Flanschelement 5 des Verteilerkopfes 1 gelagert ist. Mittels des als Hydraulikzylinder ausgebildeten Betätigungselementes 18 läßt sich die Scheibe 17 in Pfeilrichtung 19 verdrehen, so daß die Schieber 12 aus der in Fig.4 dargestellten Position in die in Fig.5 dargestellte Position zu schieben sind. Mittels einer dem Hydraulikzylinder 18 zugeordneten Rückholfeder 18' kann nach dem Drucklosschalten des Hydraulikzylinders 18 die Scheibe 17 wieder in Pfeilrichtung 20 zurückgezogen werden, so daß die Schieber 12 in die in Fig.4 dargestellte Position zurückgeschoben werden. Die Schieber 12 können auf ihrer Außenseite eine an die Innenkrümmung des Deckelelementes 2 angepaßte Rundung aufweisen.
Die Schieber 12 sind auf ihrer angeströmten Seite dachförmig ausgebildet, mit seitlich schräg abfallenden Flächen 21. In der eingebauten Lage gemäß Ausführungsbeispiel sind die Schieber 12 auf ihrer oberen Seite dachförmig ausgebildet, wobei die Flächen 21 nach unten abfallen. Auf der inneren Seite weist der Schieber 12 auf seiner Oberfläche eine nach innen abfallende Fläche 22 auf. Oberhalb der Schieber 12 und im Inneren des inneren Deckelelementes 13 ist im Bereich des Verteilerkopfes 1 außerhalb des Verteilerraumes 23 die Schaumstoffplatte 24, die aus einem Polyurethan-Schaum besteht, angeordnet, die die Schieber 12 gegen den Verteilerraum 23 abdichtet. Der Verschieberraum 24 unterhalb des Polyurethan-Schaumes 24 wird durch die Schieber 12 selbst ausgeformt.

In nicht dargestellter Weise ist es auch möglich, weitere Schieber 12 in dem Verteilerkopf 1 mit einer zusätzlichen, jedoch nicht dargestellten Steuerscheibe anzuordnen, so daß jeder zweite Abzweig 10 verschließbar ist, wobei dann jedoch gleichzeitig über die Dosiereinrichtung die dosierte Menge Saatgut zu reduzieren ist. Hierdurch wird eine Teilbreitenschaltung erreicht. Die beiden Steuerscheiben sind unabhängig mittels Ferndbedienungseinrichtungen betätigbar.

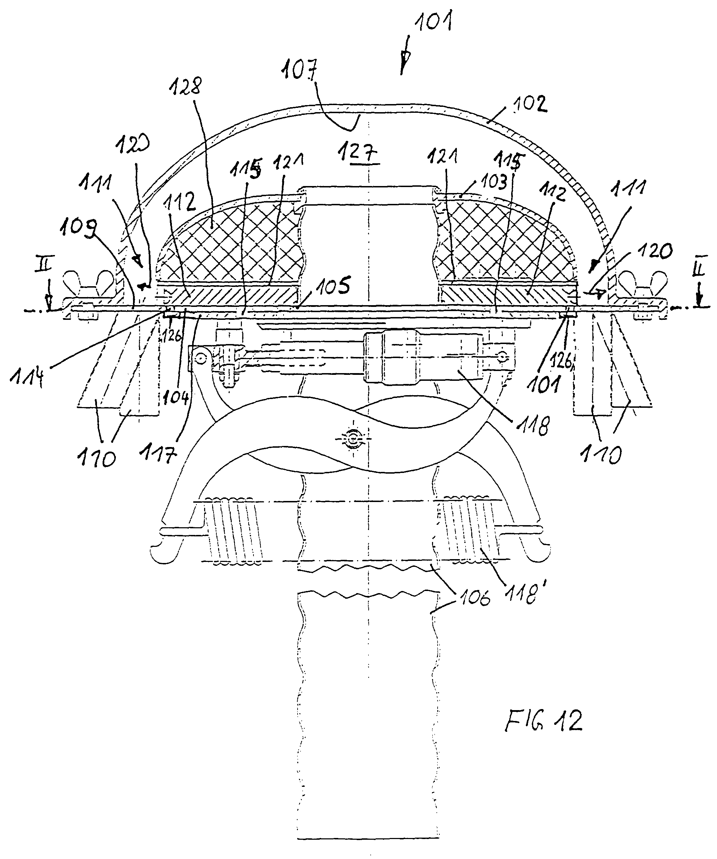

Bei dem Ausführungsbeispiel gemäß den Fig.9 und 10 werden je Fahrspur drei Säschare verschlossen. Hierzu ist es dann erforderlich neben der Umsetzung der Schieber 12 zusätzliche Schieber 12 und eine andere Steuerscheibe an dem Verteilerkopf 1 zu montieren.

Die Fig.11 zeigt im Vergleich zu der Fig.5 breiter ausgebildete Schieber 12', die teilweise neben dem völlig abgesperrten Abzweig 10 auch die unmittelbar benachbarten Abzweige 10" teilweise abdecken. Auch diese Schieber 12' weisen jeweils auf der angeströmten Seite eine dachförmige Form auf, so daß die aufgeblasenen Materialpartikel eine seitliche Bewegungskomponente bekommen. Durch die teilweise Abdeckung der unmittelbaren Nachbarabzweige 10" des völlig abgedeckten Abzweiges 10' wird eine unerwünschte Mehranhäufung von Material in zu großer Größenordnung verhindert. Es wird somit also eine Vergleichmäßigung der Aufteilung des an sich dem abgesperrten Abzweig 10' zugeführten Saatgutes auf mehrere Abzweige 10" und 10 neben den abgesperrten Abzweig 10' in einfacher und unerwarteter Weise erreicht.

Der Verteilerkopf 101 gemäß Fig.12 ist für eine pneumatische Sämaschine vorgesehen. Der Verteilerkopf 101 ist mit einem äußeren Deckelelement 102, dem inneren Deckelelement 103 und einem Unterteil 104 ausgestattet. Das Unterteil 4 weist ein Verbindungselement 105 zur Anbringung auf dem teilweise als Wellrohr ausgebildetem Steigrohr 106 auf. Vor dem Steigrohr 106 kann ein bogenförmiges Rohr angeordnet sein, welches an eine nicht dargestellte Dosiereinrichtung und an einem nicht dargestellten Gebläse angeschlossen ist. Über einer Dosiereinrichtung wird dem Steigrohr 106 und dem Verteilerkopf 101 in Verbindung mit dem Luftstrom in bekannter und daher nicht näher dargestellter Weise Saatgut oder Dünger aus einem Vorratsbehälter zugeführt.

Das Deckelelement 102 ist im oberen Bereich als Prallfläche 107 ausgebildet. Das Unterteil 104 des Verteilerkopfes 101 besteht aus einer als Blechplatte ausgebildeten Platte 108 mit Durchbrüchen 109, an die sich die Abzweige 110 anschließen. Die Abzweige 110 sind an der Blechplatte 108 angeschweißt. Sie können jedoch auch in die Durchbrüche 109 eingeklipst bzw. an diese angeklipst werden. Die Durchbrüche 109 für die Abzweige 110 werden in bevorzugter Weise auf einer CNC-gesteuerten oder anderen Werkzeugmaschine in die Platte 108 eingebracht. Die Durchmesser der Durchbrüche 109 sind an die Anzahl der Abzweige 110 angepaßt. Die Blechplatte 108 ist an dem Flanschelement 105, welches an dem Steigrohr 106 bzw. dessen Verlängerung befestigt ist, befestigt.

Das Deckelelement 102 besitzt eine nach unten offene, halbkugelähnliche Form, die im Prallbereich 107 abgeflacht ist. Das Deckelelement 102 ist rotationssymmetrisch und konkav gewölbt ausgebildet und als plattgedrückte Halbkugel ausgeformt. Im Inneren des Deckelelementes 102 ist ein weiteres inneres Deckelelement 103 angeordnet.

Die Abzweige 110 sind nach unten gerichtet, wobei sie entweder senkrecht nach unten oder in einem Winkelbereich zwischen 0-60 Grad von der Senkrechten nach unten abweichend angeordnet sein können.

Je nach Anzahl der anzuschließenden Säschare und entsprechend der Arbeitsbreite der Drillmaschine und des Scharabstandes, wird an dem Verteilerkopf 101 das entsprechende Unterteil 104 mit der erforderlichen Anzahl von Abzweigungen 110 angebracht.

Hierzu sind für den Verteilerkopf 101 eine Anzahl verschiedener Unterteile 4 jeweils mit einer verschiedenen Anzahl von Abzweigungen vorgesehen, so daß der Verteilerkopf durch das entsprechende Unterteil 104 mit der erforderlichen Anzahl von Abzweigungen 110 in einfacher und kostengünstiger Weise auszurüsten ist.

Die verschiedenen Unterteile (mit der verschiedenen Anzahl von Durchbrüchen und Abzweigen) werden in vorbeschriebener Weise hergestellt und dann zur Herstellung der Verteilerköpfe mit den jeweils gewünschten Abzweigungen dem Verteilerkopf zugeordnet. Somit lassen sich in kostengünstiger und rationeller Weise verschiedene Verteilerköpfe herstellen.

Dem Verteilerkopf 101 ist eine integrierte Verschließeinrichtung 111 für das Verschließen einer bestimmten Anzahl der Abzweige 110 zugeordnet. Diese Verschließeinrichtung 111 ist als Fahrgassenschaltung ausgebildet und weist eine entsprechend der gewünschten Anzahl der abzuschaltenden Säschare entsprechende Anzahl von Verschlußelementen, die als Schieber 112 ausgebildet sind, auf. Diese Schieber 112 werden in den in der Bodenplatte 108 radial sich erstreckenden Führungen 113 mittels der an den Schiebern 112 angeordneten und als Bolzen 114 und 115 ausgebildeten Führungselementen geführt. Der eine Bolzen 114 ist länger ausgebildet und greift zusätzlich in einer Kurvenführung, wie im Hauptpatent beschrieben, die sich in der Steuerscheibe 117 befinden. Die Steuerscheibe 117 ist unterhalb der Bodenplatte 108 drehbar an dem Flanschelement 105 des Verteilerkopfes 101 gelagert ist. Mittels des als Hydraulikzylinder ausgebildeten Betätigungselementes 118 läßt sich die Scheibe 117 verdrehen, so daß die Schieber 112 in Pfeilrichtung 120 zu verschieben sind. Mittels einer dem Hydraulikzylinder 118 zugeordneten Rückholfeder 118' wird nach dem Drucklosschalten des Hydraulikzylinders 118 die Scheibe 117 zurückgezogen werden, so daß die Schieber 112 in die dargestellte Position zurückgezogen werden. Die Schieber 112 können auf ihrer Außenseite eine an die Innenkrümmung des Deckelelementes 102 angepaßte Rundung aufweisen.

Die Schieber 112 sind in tunnelartigen Führungselementen 121 angeordnet. Die tunnelartigen Führungselemente 121 weisen die Bolzen 122 und 123 auf, die in den der Platte angeordneten Bohrungen 124 und 125 eingreifen. Die auf der Außenseite angeordneten Bolzen 122 weisen an ihrem freien Ende eine Verbreiterung 126 auf, der als Kopf ausgebildet ist, auf. Die Öffnungen 124' in der Platte 108 weisen auf den Außenseiten ebenfalls größere Ausschnitte 127 auf, die an den Außendurchmesser der Verbreiterung 126 der Bolzen 122 angepaßt sind. Die Köpfe 126 werden dann, nachdem sie durch die Öffnungen 127 eingefädelt sind, mit den Führungselementen 121 nach hinten geschoben. Somit sind durch diese Bolzen 122 mit den Köpfen die Führungselemente 121 an dem Unterteil 108 befestigt. Diese Bolzen 122 mit den Köpfen 126 bilden die Befestigungselemente. Die Führungselemente 121 ragen bis an die Wand des inneren Deckelelementes 103 heran, wie die Fig.12 zeigt. Zwischen dem inneren Deckelelement 103 und dem Unterteil 104 ist außerhalb des Verteilerraumes 127 die Schaumstoffplatte 128 angeordnet, die die Schieber 112, die Führungselemente 121 gegen den Verteilerraum 127 abdichtet. Weiterhin weist der vordere Bolzen 114, der an dem Schieber 112 befestigt ist, ebenfalls eine Verbreiterung 126 auf.

## Patentansprüche

1. Verteilerkopf für eine pneumatische Sämaschine mit einem Deckelelement und einem Unterteil zur Anbringung auf einem Steigrohr, dem durch eine Fördereinrichtung Saatgut aus einem Behälter zugeführt wird, um es mittels Druckluft über eine Prallfläche auf Abzweige zu verteilen, an die zu Saatausbringelementen führende Leitungen anschließbar sind, wobei dem Verteilerkopf (1) eine in den Verteilerkopf (1) integrierte und Schieber (12, 12') aufweisende Verschließeinrichtung (11) für eine bestimmte Anzahl der Abzweige (10') zugeordnet ist, **dadurch gekennzeichnet, daß** die Schieber (112) in tunnelartigen und sich radial erstreckenden Führungselementen (121), in denen die Schieber in radialer Richtung geführt und bewegt werden können, angeordnet sind, welche mittels Befestigungselementen (126), vorzugsweise an dem Unterteil (104), befestigt sind.

2. Verteilerkopf nach Anspruch 1, **dadurch gekennzeichnet, daß** die Schieber (12,12') auf ihrer angeströmten Seite dachförmig mit seitlich schräg nach außen abfallenden Flächen (21) ausgebildet sind.

3. Verteilerkopf nach einem oder mehreren der vorstehend genannten Ansprüche, **dadurch gekennzeichnet, daß** die Schieber (12,12') auf ihrer angeströmten Seite dachförmig mit seitlich schräg nach außen abfallenden Flächen (21) ausgebildet sind.

4. Verteilerkopf nach einem oder mehreren der vorstehend genannten Ansprüche, **dadurch gekennzeichnet, daß** die Schieber (12') zusätzlich teilweise die unmittelbar neben abgedeckten Abzweig (10') liegende Nachbarabzweige (10") abdecken.

5. Verteilerkopf nach einem oder mehreren der vorstehend genannten Ansprüche, **dadurch gekennzeichnet, daß** etwa 10 bis 50% der Fläche der Nachbarabzweige (10") abgedeckt werden.

6. Verteilerkopf nach einem oder mehreren der vorstehend genannten Ansprüche, **dadurch gekennzeichnet, daß** die Schieber (12,12') im Bereich des Verteilerkopfes (1) außerhalb des Verteilerraumes (23) mit einem Schaumstoff, beispielsweise einem Polyurethan-Schaum (24) gegen den Verteilerraum (23) abgedichtet sind.

7. Verteilerkopf nach einem oder mehreren der vorstehenden Ansprüche, **dadurch gekennzeichnet, daß** die Führungselemente (121) bis an die Wand des inneren Deckelelementes (103) heranragen.

8. Verteilerkopf nach einem oder mehreren der vorstehend genannten Ansprüche, **dadurch gekennzeichnet, daß** die Verschließeinrichtung (11) als Fahrgassenschalteinrichtung ausgebildet ist.

9. Verteilerkopf nach einem oder mehreren der vorstehend genannten Ansprüche, **dadurch gekennzeichnet, daß** die Verschließeinrichtung (11) als Teilbreitenschaltung ausgebildet ist, mit welcher jeder zweite Abzweig verschließbar ist, wobei gleichzeitig über die Dosiereinrichtung die zudosierte Menge reduzierbar ist.

10. Verteilerkopf nach einem oder mehreren der vorstehend genannten Ansprüche, **dadurch gekennzeichnet, daß** in dem Verteilerkopf (1) die die Abzweige (10') verschließenden Verschlußelemente (12,12') der Verschlußeinrichtung (11) angeordnet sind.

11. Verteilerkopf nach einem oder mehreren der vorstehend genannten Ansprüche, **dadurch gekennzeichnet, daß** die Steuerscheiben (17) für die Fahrgassenschaltung und die Teilbreitenschaltung unabhängig voneinander mittels einer Fernbedienungseinrichtung betätigbar sind.

12. Verteilerkopf nach einem oder mehreren der vorstehend genannten Ansprüche, **dadurch gekennzeichnet, daß** die Steuerscheiben (17) Verschlußelemente betätigen, welche die Abzweige (10') verschließen.

## Claims

1. Distributor head for a pneumatic sowing machine having a covering member and a lower portion for mounting on a feed pipe, to which distributor head seed material is supplied from a container through a conveying means so as to be distributed by means of compressed air via a deflecting surface to branches, and to which branches lines, which lead to seed material depositing members, are connectable, wherein a closure means (11) for a specific number of branches (10'), which closure means (11) has sliders (12, 12') and is integrated into the distributor head (1), is assigned to the distributor head (1), **characterised in that** the sliders (112) are disposed in guide members (121), which are tunnel-like and extend in a radial manner and in which the sliders can be guided and displaced in the radial direction, which guide members (121) are mounted by means of fixing members (126), preferably on the lower portion (104).

2. Distributor head according to claim 1, **characterised in that** the sliders (12, 12') are configured on their inflow side so as to be roof-shaped with surfaces (21) which fall away laterally in an outwardly inclined manner.

3. Distributor head according to one or several of the preceding claims, **characterised in that** the sliders (12, 12') are configured on their inflow side so as to be roof-shaped with surfaces (21), which fall away laterally in an outwardly inclined manner.

4. Distributor head according to one or several of the preceding claims, **characterised in that** the sliders (12') in addition partially cover the adjacent branches (10"), which are directly next to covered branch (10').

5. Distributor head according to one or several of the preceding claims, **characterised in that** approximately 10 to 50% of the surface of the adjacent branches (10") is covered.

6. Distributor head according to one or several of the preceding claims, **characterised in that** the sliders (12, 12') are sealed against the distributor chamber (23) in the region of the distributor head (1) externally of the distributor chamber (23) with a foam material, for example a polyurethane foam (24).

7. Distributor head according to one or several of the preceding claims, **characterised in that** the guide members (121) project up to the wall of the internal covering member (103).

8. Distributor head according to one or several of the preceding claims, **characterised in that** the closure means (11) is configured as tramline switching means.

9. Distributor head according to one or several of the preceding claims, **characterised in that** the closure means (11) is configured as partial width switching, with which every second branch is closable, the metered amount being reducible at the same time via the metering means.

10. Distributor head according to one or several of the preceding claims, **characterised in that** the closure members (12, 12') of the closure means (11), which members close the branches (10'), are disposed in the distributor head (1).

11. Distributor head according to one or several of the preceding claims, **characterised in that** the control discs (17) for the tramline switching and the partial width switching are actuatable independent of one another by means of a remote control device.

12. Distributor head according to one or several of the preceding claims, **characterised in that** the control discs (17) actuate closure members, which close the branches (10').

## Revendications

1. Tête de distribution pour un semoir pneumatique comportant un élément de couvercle et une partie inférieure pour être installée sur un tube montant recevant les semences d'un réservoir par une installation d'alimentation pour répartir les semences avec de l'air comprimé et une surface de rebondissement entre les embranchements auxquels sont raccordées les conduites reliées aux éléments de distribution de semence,
la tête de distribution (1) ayant une installation de fermeture (11) intégrée à la tête de distribution (1) et comportant des tiroirs (12, 12') associés à un certain nombre d'embranchements (10'),
**caractérisée en ce que**
les tiroirs (112) sont installés dans des éléments de guidage (121) en forme de tunnel, s'étendant radialement, dans lesquels les tiroirs sont guidés en mouvement dans la direction radiale, ces éléments de guidage étant reliés à l'aide d'éléments de fixation (126) de préférence à la partie inférieure (104).

2. Tête de distribution selon la revendication 1,
**caractérisée en ce que**
les tiroirs (12, 12') ont une forme de toit du côté attaqué par la veine d'air avec des surfaces (21) descendant latéralement en biais vers l'extérieur.

3. Tète de distribution selon l'une ou plusieurs des revendications précédentes,
**caractérisée en ce que**
les tiroirs (12, 12') ont une forme de toit sur leur côté attaqué par la veine d'air avec des surfaces (21) descendant en biais latéralement vers l'extérieur.

4. Tête de distribution selon l'une ou plusieurs des revendications précédentes,
**caractérisée en ce que**
les tiroirs (12') couvrent en outre en partie les embranchements (10") voisins de l'embranchement (10') qu'ils couvrent complètement.

5. Tête de distribution selon l'une ou plusieurs des revendications précédentes,
**caractérisée en ce que**
de 10 à 50 % de la surface des embranchements voisins (10") sont couverts.

6. Tête de distribution selon l'une ou plusieurs des revendications précédentes,
**caractérisée en ce que**
les tiroirs (12, 12') sont séparés de façon étanche au niveau de la tête de distribution (1) en dehors de la chambre de distribution (23) par une mousse par exemple une mousse de polyuréthane (24) par rapport à la chambre de distribution (23).

7. Tête de distribution selon l'une ou plusieurs des revendications précédentes,
**caractérisée en ce que**
les éléments de guidage (121) arrivent jusqu'à la paroi de l'élément de couvercle intérieur (103).

8. Tête de distribution selon l'une ou plusieurs des revendications précédentes,
**caractérisée en ce que**
l'installation de fermeture (11) est une installation de commutation de voies de passage.

9. Tête de distribution selon l'une ou plusieurs des revendications précédentes,
**caractérisée en ce que**
l'installation de fermeture (11) est réalisée sous la forme d'un moyen de commutation de largeur partielle permettant de fermer chaque second embranchement en réduisant en même temps la quantité dosée par l'installation de dosage.

10. Tête de distribution selon l'une ou plusieurs des revendications précédentes,
**caractérisée en ce que**
les éléments de fermeture (12, 12') de l'installation de fermeture (11) qui ferment les embranchements (10') sont prévus dans la tête de distribution (1).

11. Tête de distribution selon l'une ou plusieurs des revendications précédentes,
**caractérisée en ce que**
les disques de commande (17) pour la commutation des voies de passage et la commutation de la largeur partielle peuvent être actionnés indépendamment à l'aide d'une installation de télécommande.

12. Tête de distribution selon l'une ou plusieurs des revendications précédentes,
**caractérisée en ce que**
les disques de commande (17) actionnent des éléments de fermeture qui ferment les embranchements (10').
